# EUROPÄISCHE PATENTSCHRIFT

(11) **EP 0 483 575 B1**
(45) Veröffentlichungstag und Bekanntmachung des Hinweises auf die Patenterteilung: **10.08.1994**
(21) Anmeldenummer: 91117476.1
(22) Anmeldetag: 14.10.1991
(51) Int. Cl.: B65D 21/02, B65D 1/16, B29C 69/00, B29C 61/00, B29C 61/02, B29C 49/00

(54) **Weithalsfass aus Kunststoff und Verfahren zu dessen Herstellung**
Wide-mouthed plastic barrel and process for its fabrication
Bidon en plastique à large col et procédé pour sa fabrication

(30) Priorität: 29.10.1990 DE 4034226
(43) Veröffentlichungstag der Anmeldung: 06.05.1992
(73) Patentinhaber: Schütz-Werke GmbH & Co. KG., D-56242 Selters (DE)
(72) Erfinder: Schütz, Udo, W-5418 Selters (DE)
(74) Vertreter: Pürckhauer, Rolf, Dipl.-Ing.

(56) Entgegenhaltungen:
- DE-U- 9 006 150
- DE-U- 9 011 586
- US-A- 3 432 586

## Beschreibung

Die Erfindung betrifft Weithalsfässer aus thermoplastischem Kunststoff, mit einer unterhalb der Faßöffnung angeformten, radial nach außen vorstehenden Bordur zur Anbringung eines Spannringes für den Faßdeckel und einem zum Ineinanderstapeln mehrerer Fässer konisch ausgebildeten Mantelabschnitt, der an einen zylindrischen Mantelabschnitt unterhalb der Faßbordur anschließt. Solche Fässer sind in EP-A- 459 124 beschrieben.

Ein wesentlicher Nachteil der gattungsgemäßen als Ein- und Mehrwegfässer zum Einsatz kommenden Weithalsfässer besteht darin, daß beim Transport gefüllter Fässer zu Lande die Gefahr besteht, daß bei einer Verwindung der Ladefläche aufgrund von auf die Fässer übertragenen Fahrschwingungen und Erschütterungen und infolge von auf die Fässer beim Bremsen des Transportmittels wirkenden Massenträgheitskräften sowie beim Schiffstransport durch die Schlingerbewegung des Schiffes die Spannringe der Verschlußdeckel nebeneinander stehender Fässer sich übereinanderschieben und die Fässer aufeinander nach oben klettern. Dieser Klettereffekt kann zu einer Beschädigung der Spannringe und zu einer Undichtheit der Faßdeckel führen, wodurch besonders beim Transport von Gefahrgut Transportgefährdungen mit unvorhersehbaren schädlichen Folgen ausgelöst werden können.

Der Erfindung liegt die Aufgabe zugrunde, das gattungsgemäße Weithalsfaß hinsichtlich einer höchsten Transportsicherheit weiterzuentwickeln und ein Herstellungsverfahren für dieses Faß aufzuzeigen, das sich durch hohe Wirtschaftlichkeit und dementsprechend niedrige Herstellungskosten auszeichnet.

Diese Aufgabe ist erfindungsgemäß gelöst durch das Weithalsfaß mit den Merkmalen des Patentanspruches 1 und die Herstellungsverfahren nach den Patentansprüchen 5 und 7.

Die Unteransprüche 2 bis 4 betreffen vorteilhafte Weiterbildungen des Weithalsfasses.

Das erfindungsgemäße Weithalsfaß zeichnet sich durch folgende Vorteile aus:

Der radial über dem Spannring des Verschlußdeckels vorstehende Verstärkungs- und Ladungssicherungsring verhindert ein Klettern der Fässer und ein Undichtwerden der Verschlußdeckel beim Transport, schützt Spannring und Deckel gegen Transportbeschädigungen und erhöht die axiale Stauchdruckfestigkeit und radiale Steifigkeit des Fasses im oberen Abschnitt des Faßmantels. Der radial nach außen vorstehende Fußring stärkt den Bodenbereich des Fasses und verhindert weitgehend, daß die Fässer beim Transport mit dem unteren Mantelabschnitt gegeneinanderkippen. Schließlich ermöglichen der Verstärkungs- und Ladungssicherungsring unterhalb der Faßbordur und der den Bodenbereich verstärkende Fußring gegenüber den herkömmlichen Weithalsfässern eine Reduzierung der Wandstärke des Faßmantels und damit eine Materialersparnis, die zu einer Verminderung der Herstellungskosten führt.

Das erfindungsgemäße Verfahren nach Patentanspruch 5 zur Herstellung von Weithalsfässern aus thermosplastischem Kunststoff gemäß den Patentansprüchen 1 bis 4 baut auf dem aus der US-A- 3 432 586 bekannten Fertigungsverfahren auf, bei dem ein geschlossener Doppelfaßkörper mit einem Mittelring und zwei an diesen beidseitig anschließenden, ringförmigen Mantelabschnitten mit einer Faßbordur aus einem extrudierten, schlauchförmigen Vorförmling in einer Blasform geblasen, der Doppelfaßkörper entformt und anschließend durch Herausschneiden des Mittelringes, der die Blasöffnung eines Einschießblasdornes enthält, in zwei Fässer geteilt wird, und nutzt den bei den bekannten Verfahren als Abfallprodukt anfallenden Mittelring zur Herstellung des Verstärkungs- und Ladungssicherungsringes des neuen Weithalsfasses.

Das Weithalsfaß und das Verfahren zu dessen Herstellung nach der Erfindung sind nachfolgend anhand schematischer Zeichnungen näher erläutert. Es zeigt
- Fig. 1: das Weithalsfaß im Längsschnitt,
- Fig. 2: einen Stapel mehrerer Weithalsfässer nach Fig. 1,

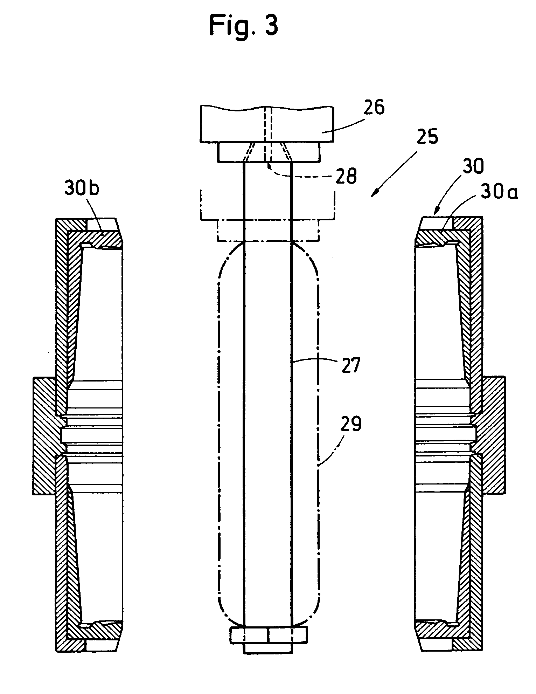

- Fig. 3: die Blasformmaschine mit geöffneter Blasform beim Extrudieren und Vorblasen des Vorformlings,

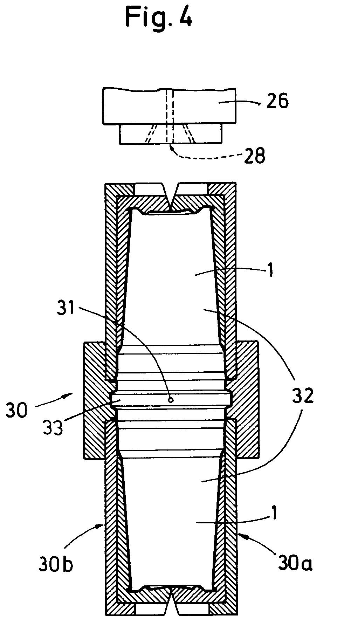

- Fig. 4: die Blasformmaschine mit geschlossener Blasform beim Hauptblasen eines Doppelfaßkörpers und

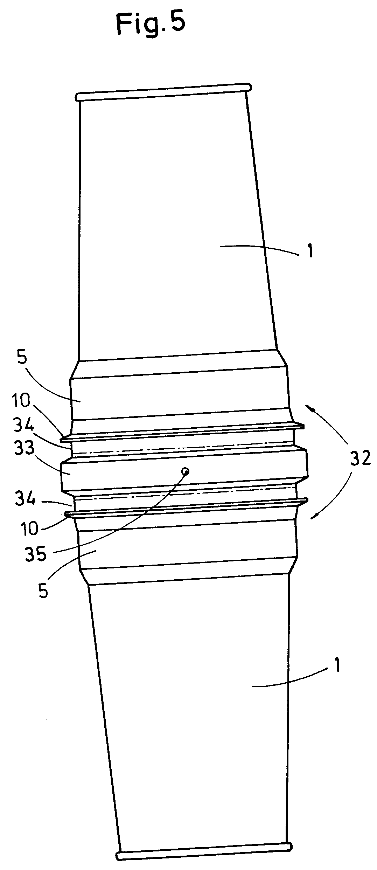

- Fig. 5: den entformten Doppelfaßkörper.

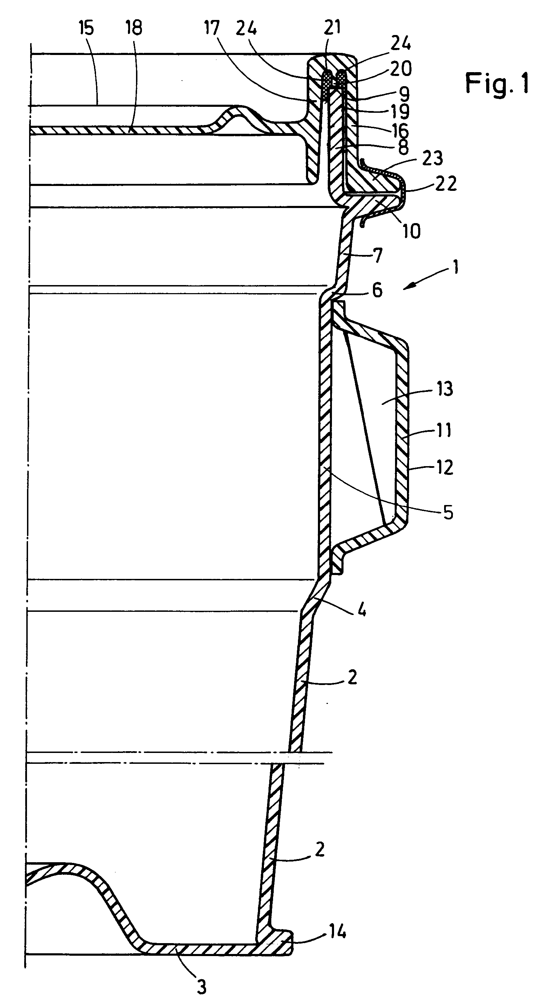

Das Weithalsfaß 1 nach Fig. 1 aus thermoplastischem Kunststoff weist einen konischen Mantelabschnitt 2 auf, der unten durch einen Boden 3 geschlossen ist und in Richtung zur Faßöffnung über einen konischen Ringabschnitt 4 in einen zylindrischen Mantelabschnitt 5 übergeht, an den sich über eine Ringschulter 6 ein in Richtung zur Faßöffnung leicht konisch erweiternder Mantelabschnitt 7 und der zylindrische Faßhals 8 anschließen, an den mit Abstand unterhalb des Öffnungsrandes 9 die radial nach außen vorstehende, massive Bordur 10 angeformt ist.

Auf dem zylindrischen Mantelabschnitt 5 des Weithalsfasses 1 sitzt ein als Hohlprofilring ausgebildeter, radial über die Faßbordur 10 nach außen vorstehender Verstärkungs- und Ladungssicherungsring 11, der ein Trapezprofil 12 aufweist und über den ganzen Umfang mit radial ausgerichteten Versteifungsrippen 13 versehen ist.

An den Faßboden 3 ist ein radial nach außen gerichteter, massiver Fußring 14 angeformt.

Das Weithalsfaß 1 wird mit einem aus Kunststoff gespritzten Deckel 15 verschlossen, der einen den Faßhals 8 umschließenden Außenrand 16 und einen in den Faßhals 8 eintauchenden Innenrand 17 aufweist, der über den unterhalb der Faßöffnung gelegenen Deckelboden 18 in den Faßraum hineinragt. Außen- und Innenrand 16, 17 des Deckels 15 bilden einen Ringraum 19, von dessen Grund ein Ringsteg 20 axial vorsteht. Der Ringsteg 20 ist mit einer Zweikomponenten-Dichtungsmasse 21, z.B. Polyurethan mit Härter,umspritzt.

Beim Schließen des Deckels 15 mittels eines Spannringes 22, der einen unten am Deckelaußenrand 16 angeformten umlaufenden Flansch 23 übergreift und die Faßbordur 10 untergreift, wird der Ringsteg 20 unter Aufteilung der Dichtungsmasse 21 in zwei Dichtringe 24 auf den Öffnungsrand 9 des Faßhalses 8 aufgepreßt, wobei die Dichtringe 24 über den Öffnungsrand 9 vorgespannt werden. Bei geschlossenem Spannring 22 berühren sich der Flansch 23 des Deckels 15 und die Faßbordur 10 nicht, so daß auf den Deckel 15 einwirkende Axialkräfte sicher unmittelbar in den Faßhals 8 und den Faßkörper eingeleitet werden.

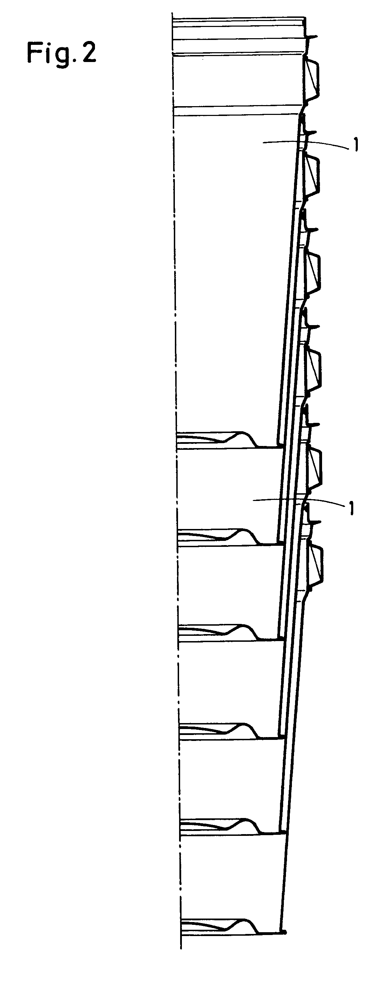

Nach Abnahme der Deckel 15 können gemäß der Darstellung in Fig. 2 mehrere leere Fässer 1 mit den konischen Mantelabschnitten 2 ineinander gestapelt werden, wobei ein Faß 1 jeweils mit dem konischen Ringabschnitt 4 auf dem Öffnungsrand 9 des den konischen Mantelabschnitt 2 aufnehmenden Fasses 1 aufliegt.

Zur Herstellung der Weithalsfässer 1 nach Fig. 1 aus einem thermoplastischen Kunststoff kommt ein Extrusionsblasverfahren zum Einsatz, bei dem beim ersten Verfahrensschritt durch den Schlauchkopf 26 einer Blasformmaschine 25 taktweise ein Schlauch 27 extrudiert wird, der nach Schließen des unteren Endes mit einem Schließwerkzeug mittels über eine Düse 28 im Schlauchkopf 26 zugeführter Blasluft zu einem Vorformling 29 vorgeblasen wird.

Anschließend wird nach dem Zusammenguetschen des oberen Endes des Vorformlings 29 mittels einer Schließeinheit und dem Schließen der beiden Formhälften 30a, 30b der geteilten Blasform 30 beim zweiten Verfahrensschritt der Vorformling 29 mittels Blasluft, die über einen in den Mittelteil des schlauchartigen Vorformlings 29 eingeschlossenen Blasdorn 31 zugeführt wird, zu einem Doppelfaßkörper 32 mit einem als Hohlprofilring ausgebildeten Mittelring 33, zwei an diesen beidseitig anschließenden, ringförmigen Mantelabschnitten 34 mit der Faßbordur 10 und zwei sich konisch zu den Böden 3 des Doppelfaßkörpers 32 verjüngenden Mantelabschnitten 2 fertiggeblasen, wobei die Faßborduren 10 und die Fußringe 14 angestaucht werden.

Nach einer kurzen Kühlperiode wird die Blasform 30 geöffnet und der noch warme, formstabile Doppelfaßkörper 32 der Blasform entnommen.

Danach wird der Doppelfaßkörper 32 durch Herausschneiden des Mittelringes 33, der die Blasöffnung 35 des Einschießblasdorns 31 zum Hauptblasen des Doppelfaßkörpers 32 einhält, in zwei gleich große Fässer 1 geteilt.

Schließlich wird der aus dem Doppelfaßkörper 32 herausgeschnittene, noch warme Mittelring 33 als Ladungssicherungsring 11 von unten über den Faßboden 3 und den konischen Mantelabschnitt 2 eines in einem vorhergehenden Arbeitsgang geblasenen, abgekühlten Fasses 1 bis zum Anschlag an der Ringschulter 6 auf den zylindrischen Mantelabschnitt 5 aufgeschoben. Beim Abkühlen schrumpft der Ladungssicherungsring 11 auf den zylindrischen Mantelabschnitt 5 des Fasses 1 auf.

In Abänderung des vorbeschriebenen Herstellungsverfahrens besteht die Möglichkeit, den Doppelfaßkörper 32 mit zwei gleichen, als Hohlprofilringe ausgebildeten Mittelringen 33 zu blasen und den Doppelfaßkörper 32 durch Herausschneiden der beiden Mittelringe 33 in zwei Fässer 1 zu teilen, so daß für beide in einem Arbeitsgang geblasenen Fässer 1 ein Ladungssicherungsring 11 verfügbar ist.

Das vorbeschriebene Doppelformblasverfahren ermöglicht eine rationelle, kostengünstige Massenfertigung von Weithalsfässern mit einem Verstärkungs- und Ladungssicherungsring im Abstand unterhalb der Faßbordur, wobei durch die Verwendung des beim Teilen des Doppelfaßkörpers in zwei Fässer normalerweise als Abfallprodukt anfallenden Mittelringes als Verstärkungs- und Ladungssicherungsring Materialkosten und durch die Ausnutzung der in dem Mittelring enthaltenen restlichen Wärmeenergie vom Blasformen zum Aufschrumpfen des Mittelringes als Ladungssicherungsring auf ein abgekühltes Faß Energiekosten gespart werden.

Bei einem weiteren abgeänderten Verfahren zur Herstellung von Weithalsfässern 1 nach Fig. 1 wird der unterhalb der Faßbordur 10 angeordnete Verstärkungs- und Ladungssicherungsring 11 als Kunststoffspritzteil gefertigt. Je zwei Ladungssicherungsringe 11 werden beim Blasen eines Doppelfaßkörpers 32 an die späteren Einzelfässer 1 angeblasen. Das Kunststoffgranulat zum Spritzen der Ladungssicherungsringe 11 wird vorzugsweise aus Abfallkunststoffteilen, beispielsweise aus den beim Teilen der Doppelfaßkörper 32 anfallenden Mittelringen 33 gewonnen.

## Patentansprüche

1. Weithalsfaß aus thermoplastischem Kunststoff, mit einer unterhalb der Faßöffnung angeformten, radial nach außen vorstehenden Faßbordur (10) zur Anbringung eines Spannringes (22) für den Faßdeckel (45) und einem zum Ineinanderstapeln mehrerer Fässer konisch ausgebildeten Mantelabschnitt (7), der an einen zylindrischen Mantelabschnitt unterhalb der Faßbordur (10) ansschließt, gekennzeichnet durch einen auf dem zylindrischen Mantelabschnitt (5) mit Abstand unterhalb der Faßbordur (10) angeordneten, radial nach außen über die Faßbordur (10) vorstehenden Verstärkungs- und Ladungssicherungsring (11) und einen an den Faßboden (3) angeformten, radial nach außen gerichteten Fußring (14).

2. Weithalsfaß nach Anspruch 1, dadurch gekennzeichnet, daß der Ladungssicherungsring (11) unterhalb der Faßbordur (10) als Hohlprofilring ausgebildet ist.

3. Weithalsfaß nach Anspruch 2, dadurch gekennzeichnet, daß der Ladungssicherungsring (11) ein Trapezprofil (12) besitzt.

4. Weithalsfaß nach Anspruch 2 und 3, dadurch gekennzeichnet, daß der Ladungssicherungsring (11) Versteifungsrippen (13) aufweist.

5. Verfahren zur Herstellung von Weithalsfässern aus thermoplastischem Kunststoff nach Anspruch 1 bis 4, bei dem ein geschlossener Doppelfaßkörper (32) mit einem Mittelring (33) und zwei an diesen beidseitig anschließenden, ringförmigen Mantelabschnitten (34) mit einer Faßbordur (10) aus einem extrudierten, schlauchförmigen Vorformling (29) in einer Blasform (30) geblasen, der Doppelfaßkörper (32) entformt und anschließend durch Herausschneiden des Mittelringes (33), der die Blasöffnung (35) eines Einschießblasdornes (31) enthält, in zwei Fässer (1) geteilt wird, gekennzeichnet durch das Blasen eines Doppelfaßkörpers (32) mit einem als Hohlprofilring ausgebildeten Mittelring (33) und zwei sich konisch zu den Böden (3) des Doppelfaßkörpers (32) verjüngenden Mantelabschnitten (2) und das Aufschrumpfen des aus dem Doppelfaßkörper (32) herausgeschnittenen Mittelringes (33) als Ladungssicherungsring (11) auf eines der beiden Fässer (1) oder ein in einem vorhergehenden Arbeitsgangs geblasenen Faß (1), wobei der Mittelring (33) über den Faßboden (3) und den konischen Mantelabschnitt (2) bis zum Anschlag an einer unterhalb der Faßbordur (3) gebildeten Ringschulter (6) auf das Faß (1) aufgeschoben wird.

6. Verfahren nach Anspruch 5, dadurch gekennzeichnet, daß der Doppelfaßkörper (32) mit zwei gleichen, als Hohlprofilringe ausgebildeten Mittelringen (33) geblasen und der Doppelfaßkörper (32) durch Herausschneiden der beiden Mittelringe (33) in zwei Fässer (1) geteilt wird.

7. Verfahren zur Herstellung von Weithalsfässern aus thermoplastischem Kunststoff nach Anspruch 1 bis 4, bei dem ein geschlossener Doppelfaßkörper (32) mit einem Mittelring (33) und zwei an diesen beidseitig anschließenden, ringförmigen Mantelabschnitten (34) mit einer Faßbordur (10) aus einem extrudierten, schlauchförmigen Vorformling (29) in einer Blasform (30) geblasen, der Doppelfaßkörper (32) entformt und anschließend durch Herausschneiden des Mittelringes (33), der die Blasöffnung (35) eines Einschießblasdornes (31) enthält, in zwei Fässer (1) geteilt wird, gekennzeichnet durch das Blasen eines Doppelfaßkörpers (32) mit zwei sich konisch zu den Böden (3) desselben verjüngenden Mantelabschnitten (2), wobei an die ringförmigen Mantelabschnitte (34) im Abstand von der Faßbordur (10) je ein in die Blasform (30) eingelegter, aus einem vorzugsweise wiederaufbereiteten Kunststoffgranulat spritzgegossener Verstärkungs- und Ladungssicherungsring (11) angeblasen wird.

## Claims

1. Wide-necked barrel made of thermoplastics material, with a barrel border (10) integrally formed below the barrel opening and projecting radially outwards, for application of a clamping ring (22) for the barrel lid (15), and with a shell portion (7) with a conical shape enabling a plurality of barrels to be stacked one into the other, said conical shell portion (7) connecting with a cylindrical shell portion beneath the barrel border (10), characterised by a strengthening and load safety ring (11) disposed on the cylindrical shell portion (5) at a spacing beneath the barrel border (10) and projecting radially outwards over the barrel border (10) and by a radially outwardly oriented base ring (14) integrally moulded on the barrel base (3).

2. Wide-necked barrel according to claim 1, characterised in that the load safety ring (11) is formed beneath the barrel border (10) as a hollow profile ring.

3. Wide-necked barrel according to claim 2, characterised in that the load safety ring (11) has a trapezoidal profile (12).

4. Wide-necked barrel according to claim 2 and 3, characterised in that the load safety ring (11) has reinforcing ribs (13).

5. Method of manufacturing wide-necked barrels from thermoplastics material according to claims 1 to 4, in which an enclosed double barrel body (32) with a central ring (33) and connecting on either side thereof two annular shell portions (34) with a barrel border (12) is blown in a blow mould (30) from an extruded tube-shaped preform (29) the double barrel body (32) is removed from the mould and thereafter divided into two barrels (1) by cutting out the central ring (33) which contains the blower opening (35) of an injection blower spike (31), characterised by blow-moulding of a double barrel body (32) with a central ring (33) in the form of a hollow profiled ring, and two shell portions (2) tapering conically towards the bases (3) of the double barrel body (32), and by shrinking the central ring(33) which has been cut out of the double barrel body (32), as a load safety ring (11) on to one of the two barrels (1), or on to a barrel (1) blow-moulded during a previous working cycle, the central ring (33) being pushed on to the barrel (1), over the barrel base (3) and the conical shell portion (2), until it abuts against an annular shoulder (6) formed beneath the barrel border (10).

6. Method according to claim 5, characterised in that the double barrel body (32) is blow-moulded with two identical central rings (33) in the form of hollow profile rings, and the double barrel body (32) is divided into two barrels (1) by cutting out the two central rings (33).

7. Method of manufacturing wide-necked barrels from thermoplastics material according to claims 1 to 4, in which a closed double barrel body (32) with a central ring (33) and two annular shell portions (34) connecting therewith on either side, with a barrel border (10) is blow-moulded in a blow mould (30) from an extruded tube-shaped preform (29), the double barrel body (32) is removed from the mould and then divided into two barrels (1) by cutting out the central ring (33) which contains the injection blower spike (31), characterised by blow-moulding a double barrel body (32) with two shell portions (2) tapering conically towards the bases (3) of the same, a strengthening and load safety ring (11) in each case, laid into the blow mould and injection-moulded from preferably recycled plastics granulate, is blow-moulded on to the annular shell portions (34) at a spacing from the barrel border (10).

## Revendications

1. Récipient à col large en matière thermoplastique, comportant un rebord (10) qui est formé au-dessous de l'ouverture du récipient, fait saillie radialement vers l'extérieur et est utilisé pour le montage d'une bague de serrage (22) pour le couvercle (45) du récipient, et une section d'enveloppe (7), qui est réalisée avec une forme conique pour l'empilage de plusieurs récipients à l'état emboîté et qui se raccorde à une section d'enveloppe cylindrique située au-dessous du rebord (10) du récipient, caractérisé par une bague de renforcement et de protection du chargement (11), qui est disposée sur la section d'enveloppe cylindrique (5) à une certaine distance au-dessous du rebord (10) du récipient et fait saillie radialement vers l'extérieur au-delà de ce rebord, et une bague de base (14) qui est formée sur le fond (3) du récipient et est dirigée radialement vers l'extérieur.

2. Récipient à col large suivant la revendication 1, caractérisé par le fait que la bague de protection du chargement (11) est réalisée sous la forme d'une bague évidée profilée, au-dessous du rebord (10) du récipient.

3. Récipient à col large suivant la revendication 2, caractérisé par le fait que la bague de protection du chargement (11) possède un profil trapézoïdal (12).

4. Récipient à col large suivant les revendications 2 et 3, caractérisé par le fait que la bague de protection du chargement (11) possède des nervures de renforcement (13).

5. Procédé pour fabriquer des récipients à col large en matière thermoplastique suivant les revendications 1 à 4, selon lequel on forme par soufflage, dans un moule de soufflage (30), un corps de récipient double fermé (32) comportant une bague médiane (33) et deux sections d'enveloppes annulaires (34) qui se raccordent des deux côtés à cette bague, avec un rebord (10) du récipient, à partir d'une ébauche extrudée en forme de tuyau (29), on démoule le corps du récipient double (32) et ensuite on le subdivise en deux récipients (1) par découpage de la bague médiane (33) qui comporte l'ouverture de soufflage (35) d'un mandrin d'insertion à soufflage (31), caractérisé par le soufflage d'un corps de récipient double (32) possédant une bague médiane (33) réalisée sous la forme d'une bague profilée évidée, et deux sections d'enveloppes (2) qui se rétrécissent avec une forme conique en direction des fonds (3) du corps de récipient double (32), et par l'emmanchement par thermocontraction de la bague médiane (33) découpée à partir du corps de récipient double (32), en tant que bague de protection du chargement (11) sur l'un des deux récipients (1) ou sur un récipient (1) formé par soufflage lors d'une étape opératoire précédente, la bague médiane (33) étant emmanchée par-dessus le fond (3) du récipient et par-dessus la section d'enveloppe conique (2) jusqu'à venir en butée contre un épaulement annulaire (6) formé sur le récipient (1) au-dessous du rebord (3) de ce récipient.

6. Procédé suivant la revendication 5, caractérisé par le fait qu'on souffle le corps de récipient double (32), comportant deux bagues médianes (33) identiques, réalisées sous la forme de bagues profilées évidées, et qu'on divise le corps de récipient double (32) en deux récipients (1), par découpage des deux bagues médianes (33).

7. Procédé pour fabriquer des récipients à col large en matière thermoplastique suivant les revendications 1 à 4, selon lequel on forme par soufflage, dans un moule de soufflage (30), un corps de récipient double fermé (32) comportant une bague médiane (33) et deux sections d'enveloppes annulaires (34) qui se raccordent des deux côtés à cette bague, avec un rebord (10) du récipient, à partir d'une ébauche extrudée en forme de tuyau (29), on démoule le corps du récipient double (32) et ensuite on le subdivise en deux récipients (1) par découpage de la bague médiane (33), qui comporte l'ouverture de soufflage (35) d'un mandrin d'insertion par soufflage (31), caractérisé par le soufflage d'un corps de récipient double (32) comportant deux sections d'enveloppes (2) qui se rétrécissent avec une forme conique en direction des fonds (3) de ce corps, auquel cas on fixe par soufflage respectivement une bague de renforcement avec protection du chargement (11) insérée dans le moule de soufflage (30) et moulée par injection à partir de granulés de matière plastique de préférence régénérés, sur les sections d'enveloppes annulaires (34), à distance du rebord (10) du récipient.
